# EUROPEAN PATENT APPLICATION

(11) **EP 4 328 355 A2**
(43) Date of publication of application: **28.02.2024**
(21) Application number: 23188521.1
(22) Date of filing: 28.07.2023
(51) Int. Cl.: C25B 1/02, C25B 1/55, C25B 11/052, C25B 11/061, C25B 11/067, C25B 11/077, C25B 11/087, C25B 15/02, C23F 1/00

(54) **PROCESS OF REUSING BI-FACIAL METAL SUBSTRATES FOR PHOTOACTIVE SEMICONDUCTOR MATERIALS FOR SOLAR WATER SPLITTING**

(30) Priority: 23.08.2022 IN 202221048058
(71) Applicant: Indian Oil Corporation Limited, 400 051 Mumbai Bandra (East) (IN)
(72) Inventor: SACHDEV, Sunil, 121007 Faridabad (IN); TALASILA, Gopichand, 121007 Faridabad (IN); TIWARI, Vinay, 121007 Faridabad (IN); SRIVASTVA, Umish, 121007 Faridabad (IN); SAXENA, Deepak, 121007 Faridabad (IN)
(74) Representative: Turner, Craig Robert

(57) **Abstract**

The present invention relates to reusable metal substrate for photoelectrochemical solar water splitting applications. The process comprises preparing a surface of the metal substrate, coating the surface of the metal substrate using photoactive semiconductor thin films, forming a working electrode, scaling-up of the working electrode, and re-using the metal substrate. The present invention has advantages such as higher current, better handling, capability to reuse and capability of direct geometrical scale-up of the electrodes.

## Description

### FIELD OF THE INVENTION:

The present invention relates to reusable metal substrate for photoelectrochemical (PEC) solar water splitting (WS) applications. More particularly, the present invention provides a process for reusing a metal substrate for PEC solar WS applications. The present invention also provides a process for cleaning the used metal substrate for reusing it.

### BACKGROUND OF THE INVENTION:

Water splitting refers to a chemical reaction to dissociate the water into oxygen and hydrogen. Currently, a process, such as PEC water splitting, is employed for dissociating water and thereby, to produce hydrogen gas. The PEC WS process includes a semiconductor electrode disposed in electrolyte solution. The semiconductor electrode is provided to convert solar energy directly into chemical energy to dissociate water. In particular, the semiconductor electrode converts the solar energy into electron-hole pairs to conduct redox reaction for WS.

Solar WS has been recognized as an important source of low-cost, clean, and environment-friendly process for producing green hydrogen. However, full scale production of green hydrogen requires increased development and improvement of system performance through better understanding of PEC electrode behavior, material usage, and simpler and cheaper industrial processes. WS is an energetically uphill chemical reaction that requires 1.23V for the complete decomposition of pure water into hydrogen and oxygen.

Main criteria for the selection of photoactive material:
1. Band gap of the semiconducting material should lie between 1.6 eV (1.23 eV + over potential) and 2.6 eV (larger than 2.5 eV). Then, the material can harvest the visible part of the sunlight and enhance the efficiency of the water splitting.
2. Band edge positions means that band edges must straddle between the redox potentials of H₂O (0.00 eV and 1.23 eV). Semiconductor materials must satisfy the minimum band gap requirement (~1.4 eV). Valence band (VB) holes are powerful oxidants (+1.0 to +3.5V vs. SHE), while conduction band (CB) electrons are good reductants (+0.5 to -1.5V vs. SHE).
3. Efficient charge transfer at the electrode.

The main component of the PEC cell is the working electrode which comprises of photoactive semiconductor coated on a suitable electrically conducting substrate, which converts incident photons to electron-hole pairs. These electrons and holes are spatially separated from each other through the electric field generated at the interface of electrode and electrolyte with the effect of photo voltage and external bias. The generated electrons (photo anode) are swept towards the conducting substrate and are transported to the counter-electrode via an external electrical contact. At the counter electrode, the electrons reduce water to form hydrogen gas. The photo generated holes are swept toward the semiconductor-electrolyte interface, where they oxidize water to form oxygen gas.

Generally, for water splitting applications transparent conductive oxide (TCO) films are mainly used as conducting back contact. Metal oxides like SnO₂, In₂O₃ and ZnO are coated by using physical vapor deposition (PVD), chemical vapor deposition (CVD), atomic layer deposition (ALD) and sputtering methods. Indium doped tin oxide (ITO) and fluorine doped tin oxide (FTO) are widely used for solar cell and electrical component manufacturing. FTO is most widely used as the electrode for solar water splitting because of high temperature heat resistance (~600°C) without much increase in sheet resistance.

In conventional solar water splitting, glass-based electrodes are used mostly for research and experimentation. But glass is heavy, fragile, and rigid, thereby requires extra care and substantial support for fabrication and electrode preparation. Glass poor thermal expansivity and conductivity cause thermal gradients and non-uniform properties, these properties make higher temperature (350-500°C) thin film processing and geometrical scale-up of electrodes difficult. This leads to low yield and decrease in performance. These problems can be eliminated or minimized by using metal substrates in place of glass-based substrates.

Indian patent 352131 discloses a method/design to geometrically scale-up the size of working electrode on ITO/FTO substrate through employing multiple metal interconnects to reduce overall resistance.

Patent publication US20030170437A1 discloses a method to produce a transparent electrode substrate with an ITO film. The film can withstand up to 300°C without increase in electrical resistance.

Patent publication DE102007059958A1 discloses a transparent conductive fluorine-doped tin oxide (FTO) film glass, which can be used as a metal electrode layer and for defogging purposes. For the FTO layer formation, molar ratio of F to Sn is optimized.

Patent publication JPH07105166B2 discloses a method for producing fluorine-doped tin oxide film on glass substrate under controlled non-oxidizing environment. Film resistance is considerably reduced with a good electrical conductor density.

Patent publication CN101638772B discloses a method for preparing fluorine doped tin oxide transparent conductive film by radio-frequency magnetron sputtering method. Experimental procedure and steps are comprehensively explained.

Patent publication CN103993281A discloses a preparation method of FTO transparent conducting thin film, wherein they used magnetron sputtering deposition technology for thin film deposition and solid-state reaction synthesis for FTO target material synthesis. Detailed experimental process is enumerated.

M. S. Chowdhury *et al.* relates to a recovery and reuse of FTO-coated glass substrate by a layer-by-layer extraction approach. In this, the perovskite solar cell (PSC) comprises glass/transparent conducting oxide (TCO)/electron transport material (ETM)/mesoporous scaffold/perovskite/hole transport material (HTM)/metal contact. The PSC was recovered by immersion in chlorobenzene (3 mins), DI water (10 mins), DMF (2 mins), and DMF (10 mins) to obtain recycled FTO glass substrate. The PSC achieves a current density of 22.03 mA/cm². Maayan Sohmer *et al.* relates to recoverable triple-oxide mesostructured perovskite solar cells (PSC). It comprises a conductive FTO-coated glass followed by mpTiO₂/mpZrO₂/mpITO. The PSC is recovered by rinsing thoroughly with dimethylformamide for the removal of the perovskite from the scaffold, followed by heating at 500°C. It achieves an average current density of 19.4 mA/cm² with SD of 1.8 mA/cm².

Zhiqun Lin *et al.* relates to a PSC comprising an ETL, a perovskite absorber layer, and a HTL, all of which are deposited and synthesized on TCO-coated glass substrate with a metal back electrode on the top of layers (the TCO is used as a front electrode). It further discloses recovery of the glass substrate by solvent treatment with DMF and KOH. Nathan S. Lewis *et al.* relates to a photoelectrochemical device that consists of a periodic array of buried homojunction n-p+-Si microwires that have been sequentially coated with a radial sheath of ITO and WO3. It also discloses bottom-up fabrication process from a reusable photo-inactive n+-Si substrate.

Ray-Hua Horng *et al.* relates to cross-shaped pattern epitaxial lift-off (ELO) technology to release crack-free single crystal epilayers with a solar cell structure from a gallium arsenide (GaAs) substrate. It also discloses recovery of substrate using epitaxial lift off by magnetic force, solvent treatment, and chemical etching. G. J. Bauhuis *et al.* relates to reuse of GaAs or Ge wafers for III-V solar cell structure using epitaxial lift off followed by chemo-mechanical polishing. In this, ammonia-peroxide solutions are used as polishing etchant.

US10087535B2 relates to photoelectrochemical devices comprising silicon-doped GaAs substrate. The substrate can be removed by one of several possible techniques: the substrate may be etched away, or it may be removed nondestructively to enable its reuse. The device provides a maximum current density of 12.5 mA/cm². WO2010067911A1 discloses a spring manufacturing method comprising a metal plate made of stainless steel. It is coated on both surfaces with a photosensitive photoresist, after forming spring pattern and irradiating UV rays, the photosensitive photoresist part is removed followed by etching the plate. Further, the cited document discloses bi-facial deposition of photosensitive photoresist on both surfaces of metal plate and sintering temperature of 150-440°C. CN109461663A discloses an electrode of a metal coated with a photosensitive material. This photosensitive material can be removed, and the metal substrate can be reused by etching process.

However, all in all the disclosures once the electrode reaches end of the life, it generally not feasible to reuse the conductive FTO/ITO layers on the substrate. Therefore, formation of conductive layer every time is a costly step.

Patent publication US7824947B2 discloses a method producing thin film solar cell on stainless steel. The stainless-steel surface treatment to remove surface roughness has been specified in the invention.

Aliyu *et al.* (2012), investigated fabrication of CdTe solar cells on metal substrates, their trends, and characteristics. Flexible metal substrate solar cells offer several advantages in terms of production, cost, and application over glass-based substrates. Zortea *et al.* (2018), investigated the behavior of an electroplated bi-layer (Ni and Cr) on a mirror surface finished (average roughness, Ra < 0.1 µm) mild steel foil.

Bremaud *et al.* (2006), deposited Cu(In,Ga)Se₂ (CIGS) solar cells on aluminum foils, CIGS layers have grown at low (450°C) deposition temperatures and an efficiency of 6.6% has been reported.

Yagioka *et al.* (2009), reported CIGS solar cells with ZnS(O,OH) buffer layers were fabricated on Mo-coated Ti foils. The CIGS thin films were deposited by the three-stage process at substrate temperatures of 460-550°C and an efficiency of 17.9% has been reported. Wuerz *et al.* (2012), (CIGS) thin-film solar cells achieve a maximum cell efficiency of 17.6% (certified) and a module efficiency of 15% on a 100 cm² substrate with a high temperature multi- stage inline CIGS process. The highest reported efficiency of 20.4% for flexible CIGS has been achieved on polyimide substrates (Chirila *et al.,* 2013) but (Zortea *et al.,* 2018) group has also reported efficiencies of 17.7% on stainless steel, 17.9% on Ti foils (Yagioka *et al.,* 2009) and 17.1% on aluminum foils (Chirila *et al.,* 2011). On mild steel substrates efficiencies of 17.6% (Wuerz *et al.,* 2012).

Most of prior art is either concentrated on optimizing ITO/FTO layer for reduction in resistance or use of metal substrates for solar cell applications. No prior art focuses on the use of metal substrates for enhancing the performance in PEC WS. Most of the prior art is related to the use of metal substrate for the fabrication of thin film solar cells which is mainly employed to provide mechanical stability and improvement in process parameters. The present invention focuses on the use of metal substrates for PEC water splitting application.

The inventors of the present invention have experimented to overcome the problems associated with transparent conductive oxide glass-based thin films on a glass substrate. Following are some of the main issues that have been addressed - limitation of sintering/process temperatures associated with ITO/FTO films, higher sheet resistance of ITO/FTO films, only one active surface in the glass substrate, lower current yield associated with glass substrate, conducting layer over glass substrate is non-reusable, and performance degradation during electrode scale-up.

### SUMMARY OF THE INVENTION:

The present invention relates to reusable metal substrate for solar water splitting applications. This invention discloses a reusable metal substrate as a best alternative to the transparent conductive oxide glass substrates. Metal substrate offers lower sheet resistance and allows bifacial coating on the substrate to offer higher current yield. Experimentally 2 times increase in current yield on single side and 4 times on both sides of metal substrate was observed as compared to their counterpart, glass-based substrates. Metal substrates enable geometrical scalability with better current yield, lower input costs, ease of handling. Metal substrates also offer higher resistance annealing/processing temperature up to 1000°C. Furthermore, it involves a low-cost procedure to reuse the metal substrates conductive layer after coating reaches end of its life.

### TECHNICAL ADVANTAGES OF THE INVENTION:

The present invention provides multi-dimensional advantages over the conventional glass-based substrates coated with conduction ITO/FTO layers for photoelectrochemical water splitting application:
(a) It enables the geometrical scale-up of the electrode without sacrificing performance.
(b) Reusability of the conducting metal layer after coating reaches end of its life.
(c) Higher resistance to process temperatures therefore eliminates performance degradation due to high temperature processing.
(d) Increase in yield, lower cost, and ease of handling in comparison to their counterpart, glass-based substrates.
(e) Provides two active surfaces for coating of semiconductor thin films and therefore enables significant increase in current yield.

### OBJECTIVES OF THE INVENTION:

The primary objective of the present invention is reusable metal substrate for PEC solar WS applications.

In another embodiment, the present invention provides a process for reusing a metal substrate for PEC solar WS applications, wherein the process comprises preparation of metal substrate surface, thin film coating of photoactive semiconductor through one or more suitable deposition techniques, bi-facial electrode synthesis, scale-up of metal substrate based photoelectrodes, and reusability of metal substrates.

In yet another embodiment, the present invention relates to reusability of the metal substrate comprising - primary cleaning for removal of photoactive semiconductor thin film coating without physically or chemically altering the metal substrate surface; secondary cleaning involving removing metal substrate surface coating by physical, mechanical, or chemical means; and chemical treatment through chemical etching or any other material application.

### BRIEF DESCRIPTION OF THE DRAWINGS:

Figure 1 discloses metal substrate at different stages of cleaning
Figure 2 discloses 100cm² area electrodes

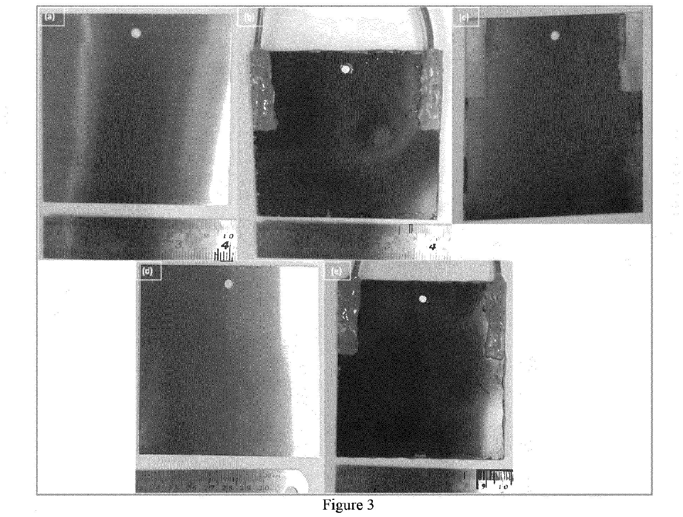

Figure 3 discloses (a) Prestine metal substrate (b) metal substrate with Co3O4(5Ni) coating (c) Intermediate stage of Recycled metal substrate (d) Re-cycled metal substrate (e) Re-used metal substrate with Co3O4(5Ni) coating.

### DETAILED DESCRIPTION OF THE INVENTION:

Those skilled in the art will be aware that the present disclosure is subject to variations and modifications other than those specifically described. It is to be understood that the present disclosure includes all such variations and modifications. The disclosure also includes all such steps of the process, features of the system, referred to or indicated in this specification, individually or collectively and all combinations of any or more of such steps or features.

### Definitions

For convenience, before further description of the present disclosure, certain terms employed in the specification, and examples are collected here. These definitions should be read in the light of the remainder of the disclosure and understood as by a person of skill in the art. The terms used herein have their meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only".

Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

Unless defined otherwise, all technical and scientific terms used herein have the same meaning as commonly understood by one of ordinary skill in the art to which this disclosure belongs. Although any methods and materials similar or equivalent to those described herein can be used in the practice or testing of the disclosure, the preferred methods, and materials are now described. All publications mentioned herein are incorporated herein by reference.

The present disclosure is not to be limited in scope by the specific embodiments described herein, which are intended for the purposes of exemplification only. Functionally equivalent products and processes are clearly within the scope of the disclosure, as described herein.

The present invention discloses reusable metal substrate for photoelectrochemical solar water splitting applications. The present invention has numerous advantages over conventional glass substrate coated with transparent and conductive ITO/FTO (Indium doped tin oxide/ fluorine doped tin oxide) layer such as higher current, better handling, capability to reuse and capability of direct geometrical scale-up of the electrodes.

In yet another embodiment, the preparation of metal substrates includes optimization of surface roughness and surface cleaning procedure for thin film deposition and detailed process for the fabrication of working electrode is enumerated. Experimental validation through semiconductor thin film coating on metal substrate has also been done. Scale-up is also demonstrated and verified experimentally by fabricating a 100 cm² photo-electrode on a metal substrate.

In another embodiment, a process for using a metal substrate for PEC solar WS, the process comprising: a) preparing a surface of the metal substrate; b) coating the surface of the metal substrate using photoactive semiconductor thin films; c) forming a working electrode; d) scaling-up of the working electrode; and e) reusing the metal substrate.

In another embodiment, step a) comprises obtaining adequate surface finish on the metal substrate followed by cleaning the surface of the metal substate. Adequate surface finish on metal substrate plane is achieved through emery paper/sandpaper/other scrubbing devices. Surface preparation helps in getting stable coating of semiconductor thin film and provides optimum performance during current conduction. The cleaning the surface of the metal substate comprises a) ultrasonic bath in acetone for a period of 15 minutes; b) followed by ultrasonic cleaning in ethanol/isopropanol for another period of 15 minutes; c) followed by ultrasonic cleaning in deionized water for another period of 15 minutes; and d) finally drying with inert gas.

In yet another embodiment, use of metal substrate is proposed in place of glass-based substrates coated with conductive ITO/FTO layers for the following reasons:
1. Metal substrates offer whole of the bulk material for electrical conduction in comparison to thin ITO/FTO conducting thin layer coated over the glass substrate. This results in decrease of bulk sheet resistivity by at least 3 orders in comparison to their counterpart. Experimental results showed 2 times darker current on single side coating and 4 times increase in dark current on both sides of the substrate.
2. Metal substrate can be used for higher annealing temperatures greater than 1000°C without any noticeable increase in sheet resistivity whereas resistivity of ITO/FTO layers increase irreversibly when subjected to temperatures above 500°C.
3. Metal substrates inherently offer both sides for current conduction, however coating of ITO/FTO on both the sides will demand additional cost.
4. Use of metal substrates promotes strength and durability and thereby increases overall yield.
5. Metal substrates can be reused with minimal effort & cost whereas conducting ITO/FTO layers cannot be reused. Also, ITO/FTO conducting layer carries the major cost component factor in the glass-based substrates and therefore loads a significant cost factor every time.
6. Scale-up of glass based photoelectrodes results in significant loss in performance due to their high sheet resistivity. However, size of metal substrates can be increased directly without any degradation in performance. This advantage results in lower reactor size and therefore overall lower system cost.

In yet another embodiment, the photoactive semiconductor thin films comprise transition metal oxides, chalcogenides, perovskites, spinels, etc. Coating of photoactive semiconductors thin films on metal substrates through one or more suitable deposition techniques like ultrasonic spray pyrolysis-USP, sputtering, spin coating, dip coating, and electro deposition, etc.

In yet another embodiment, the metal substrate provides two active faces for deposition of the photoactive semiconductor thin films leading to bifacial coating. Water splitting is an energy intensive process and most of the suitable materials for electrochemical splitting of water cannot split water stand alone and hence require electrical bias through PV/other devices. Conventionally only one side of the coated substrate is used as anode/cathode and the other face of the substrate is inactive. The present invention of using a metal substrate inherently provides two active faces for the deposition of the thin films. For metal substrate both the sides are active, moreover this eliminates the need for transparent conductive oxide layer which is required in case of glass substrates.

In yet another embodiment, different semiconductor materials combination that can be coated on two sides of metal substrates are given below:
i. Photo electrochemically active material | electrochemically active material
ii. Electrochemically active material | electrochemically active material
iii. Photo electrochemically active material | photo electrochemically active material etc.

In another embodiment, the working electrode (photoelectrode) comprises photoanode or photocathode. Photoelectrode which faces the illuminated side which provides photo current, suitable material can be coated on other side to obtain higher dark current. This provides advantage of combining advantages of two different materials for gaining both photo current and dark current enhancement. This improves overall current generation per unit area and therefore aids in reduction of the size of the working electrode and thereby also provides a reduction in the reactor size. It has been verified experimentally that bi-facial electrodes prepared on the metal substrates provides 2 times more dark current compared other glass/transparent device at same bias potential on one side and 4 times on both sides of the metal substrate compared to their counterpart, glass-based substrates (FTO/ITO).

In another embodiment, working electrodes of sizes up to 100 cm² can be synthesized. Geometrical scale up of indium doped tin oxide (ITO) & fluorine doped tin oxide (FTO) glass is impractical due to high sheet resistance. This invention resolves the geometrical scale-up of photoelectrodes because sheet resistance of metal substrate is 3 orders less than the FTO/ITO glass. (Bulk resistivity: FTO, ITO ~ 4.1 × 10⁻⁵Ω.m; Aluminum ~ 2.65 × 10⁻⁸Ω.m; Brass ~ 6.2 × 10⁻⁸Ω.m; Copper ~ 1.68 × 10⁻⁸Ω.m; Mild steel ~ 9.7 × 10⁻⁸Ω.m; Stainless steel ~ 6.9 × 10⁻⁷Ω.m). Electrodes of size up to 100cm² area can be easily synthesized and fabricated through direct geometrical scale up by employing any established scalable thin film deposition process. In a preferred embodiment, by ultrasonic spray pyrolysis low cost, reproducible and uniform thin films can be deposited.

In another embodiment, the glass-based substrates coated with transparent conductive thin films like FTO, ITO have limitation on sintering temperature (up to ~600°C). Higher temperatures limit their application due to decrease in electrical conductivity. Metal substrates do not pose such limitation at higher temperatures, and they retain their conductivity after processing temperatures well above 600°C (Mild steel, stainless steel ~ 1200°C; Copper ~ 1000°C; Brass ~ 900°C; Aluminum ~ 600°C; Titanium ~ 1600°C; Nickel ~ 1400°C; Cobalt ~ 1400°C, etc.).

In another embodiment, additionally large size metal substrates are easier to handle and are not prone to fracture unlike FTO/ITO transparent conductive glass substrates. Glass breaks during synthesis, processing, sintering due to variations in process parameters (While cutting there can be formation of hairline cracks on FTO/ITO glass sheets, these cracks will grow and lead to breakage of glass while on heated chuck or during annealing; while spraying precursor solution on glass substrate of large area (100 cm²), Thermal gradient is formed because the area of spray is always at lower temperature than other substrate which is on heated chuck. Metal substrates generally have very high thermal conductivity thereby reducing the formation of thermal gradient within the material, further they have high strength and rigidity to cracks formation. Because these advantages metal substrate very useful for large size electrode synthesis compared glass-based electrodes.

In yet another embodiment, the reusability of the metal substrate comprises a) primary cleaning for removal of photoactive semiconductor thin film coating without physically or chemically altering the metal substrate surface; b) secondary cleaning involving removing metal substrate surface coating by physical, mechanical, or chemical means; and c) chemical treatment through chemical etching or any other material application. In step b) comprises negligible loss of metal substrate material. The chemical treatment comprises removal of used photoactive semiconductor material from the metal substrate surface.

In another embodiment, FTO and ITO coated glass substrates have several disadvantages like once electrode reaches end of life, it is generally not practicable to revive/ reuse conductive layer on glass. Further, processing of glass and formation of conductive layer every time is costly step, while the metal substrate is inexpensive and easy to process makes them superior. The method of the present invention focuses on reuse of the metal substrates for several times. Therefore, the same metal substrate conductive layer can be re-used for electrode preparation.

In another embodiment, as thin film coating is a surface phenomenon, surface preparation is important for good bonding. Preparation of reusable metal surface involves multiple steps, all of which are applied based on sample morphology. These steps try to reduce the surface energy of metal.

In yet another embodiment, primary cleaning for removal of semiconductor coating, salts, water, or other materials without physically or chemically altering the metal surface. For example
- solvent cleaning/immersion or ultra-sonication to remove semiconductor coating.

In yet another embodiment, secondary cleaning involves surface coating by physical, mechanical, or chemical means, small amount of parent metal substrate removed in this process. For example - sandpaper/abrasive scrubbing, other scrubbing devices and alkaline or detergent cleaning.

In yet another embodiment, finally, chemical treatment through chemical etching or any other material application removes weakly bonded oxides from the metal surface. Chemical treatment also improves the wettability of the surface and protects it from oxidation. For example - for Aluminum- activated plasma cleaning, chromic-sulfuric acid treatment; Brass- sodium dichromate solution, etching solution: ZnO, H₂SO₄, HNO₃; Copper - black oxide: Nitric acid - sodium chlorite - NaOH; Mild steel- Etching solution: orthophosphoric acid + ethyl alcohol or HCl + deionized water; Stainless steel - Etching solution: HNO₃+HF+deionized water or Sodium metasilicate+ Triton x 100+ deionized water.

### EXAMPLES:

Having described the basic aspects of the present invention, the following non-limiting examples illustrate specific embodiments thereof. Those skilled in the art will appreciate that many modifications may be made in the invention without changing the essence of invention.

### Example 1: Process for cleaning and reusability of metal substrate for PEC WS

Steps followed for cleaning of metal substrates for reusability are mentioned below:
- Removal of epoxy: The epoxy and copper wire contacts are removed from the failed electrode through heat treatment. The samples is heated to around 120°C so that epoxy will turn into brittle material which can be easily peeled off from the surface.
- Chemical/Acid treatment: HCl (40-50) vol.% solution is used for the chemical treatment of the electrode after removal of epoxy and copper wires. Acidic solution is heated to a temperature around 50-60°C. The electrode is then dipped in the solution for a brief time of 30-60 sec. The electrode after acid treatment is washed with soap solution.
- Cleaning with solvents: Final cleaning of electrode surface is done with solvents.

Sequential steps are given below:
a) Ultrasonic bath in acetone for a period of 30 minutes
b) Ultrasonic cleaning in isopropyl alcohol (IPA) for 30 minutes
c) Ultrasonic cleaning in deionized water for 30 minutes
d) Drying with inert gas.

### Example 2: Bifacial coating of the metal substrate surface

To prepare Co₃O₄ precursor solution, a mixture 0.2 M of Cobalt nitrate pentahydrate was dissolved in 200 ml of deionized (DI) water. The precursor solutions were deposited by using ultrasonic spray pyrolysis method.

In this process, thin film is deposited by spraying solution onto a heated chuck where the precursor solution converted into a chemical compound. The precursor droplets are atomized using an ultrasonic atomizer. During total duration of the spray, some portion of the substrate is masked which is to be used later for contact formation. The flow rate of the solution was maintained at constant rate (5 mL/min) with a specified traversing speed (5 mm/sec). Air pressure (6 psi) optimally maintained and the distance between the nozzle and the hot plate (50cm) was fixed. All the parameters are crucial for formation of stable and uniform thin films. During the total duration of the spray, metal substrates are maintained at a constant temperature (275°C) on hot plate. Thin films thus obtained on metal substrate are then annealed at a temperature of 450°C).

### Example 4: Process for scale up of the working electrode

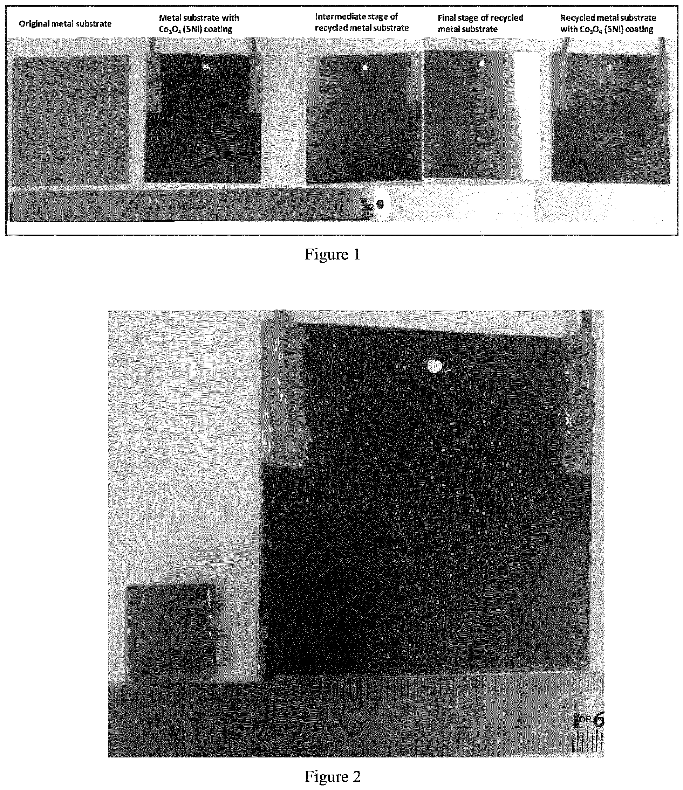

Initially, 4 cm² electrodes were tested for parametric optimization for the synthesis and performance measurement. Once performance is optimized, 100cm² area electrodes have been synthesized as shown in Figure 2.

### Example 5: Comparison of metal substrate electrode with ITO/FTO based glass electrode

Table 1 and 2 discloses experimental data pertaining to the comparison of metal substrate electrode with ITO/FTO based glass electrode.

**Table 1: Comparative data of metal substrate larger electrode and ITO/FTO based glass larger electrode**

| **Larger electrodes performance testing - 100 cm²** | | | | |
|---|---|---|---|---|
| **S. No** | **Sample information** | **Average Photocurrent Density (mA.cm⁻²)** | **Avg Light current Density (mA.cm⁻²)** | **Avg Dark current Density (mA.cm⁻²)** |
| 1 | Steel substrate one side coating - Co₃O₄ (5% Ni) - 4 layers - 450°C - 100 cm² | 1.45 (Photocurrent-110.4) | 11.67 (Light Current- 886.9) | 10.22 (Dark Current-776.5) |
| 2 | Steel substrate both side coating - Co₃O₄ (5% Ni) - 4 layers - 450°C - 100 cm² | 1.96 (Photocurrent - 149) | 19.66 (Light Current- 1494) | 17.69 (Dark Current-1345) |
| 3 | FTO Glass - Co₃O₄ (5% Ni) - 450°C - 100 cm² | 0.17 (Photocurrent - 3.9) | 4.36 (Light Current- 248.4) | 4.29 (Dark Current-244.5) |

**Table 2: Comparative data of metal substrate small electrode and ITO/FTO based glass small electrode**

| **Small electrodes performance testing - 4 cm²** | | | | |
|---|---|---|---|---|
| **S. No** | **Sample information** | **Average Photocurrent Density (mA.cm⁻²)** | **Avg Light current (mA)** | **Avg Dark current (mA)** |
| 1 | Steel substrate one side coating - Co₃O₄ (5% Ni) - 4 layers - 450°C - 4 cm² | 0.834 | 54.02 | 53.186 |
| 2 | FTO Glass - Co₃O₄ (5% Ni) - 450°C - 4 cm² | 0.406 | 17.11 | 17.07 |

Light Current - Current measured in presence of light
Dark Current - Current measured in absence of light
Photocurrent = Light Current - Dark Current
Light Current Density = Light Current/ Area
Dark Current Density = Dark Current/ Area
Photocurrent Density = (Light Current - Dark Current)/ Area

It can be seen from Table 1 and 2 that Steel substrate with both side coating provides higher values for average PCD, light current and dark current, when compared to their counter parts Steel substrate with one side coating and FTO glass. The increase in performance comes from higher current yield of the metal substrate, this is because sheet resistance of metal substrate is 3 orders less than the FTO/ITO glass. Furthermore, metal substrate provides two active sides for water splitting reaction and generates more electron yield, which increases the average current density.

### Example 6: Efficiency of reused metal substrate electrode

Table 3 discloses comparative data for reused metal substrate electrode and ITO/FTO based glass electrode

**Table 3: Comparative data of Reused - metal substrate electrode and ITO/FTO based glass electrode**

| **S. No** | **Sample information** | **Average PCD (mA.cm⁻²)** | **Avg Light current (mA.cm⁻²)** | **Avg Dark current (mA.cm⁻²)** |
|---|---|---|---|---|
| **Reused** - **metal electrode performance testing - 100 cm²** | | | | |
| 1 | Steel substrate both side coating - Co₃O₄ (5% Ni) - 4 layers - 450°C - 100 cm² | 1.96 (Photocurrent-149) | 19.66 (Light Current- 1494) | 17.69 (Dark Current-1345) |
| 2 | Re-used Steel substrate both side coating - Co₃O₄ (5% Ni) - 4 layers - 450°C - 100 cm² | 2.0 (Photocurrent - 152) | 20.05 (Light Current- 1524) | 18.04 (Dark Current-1371.9) |

## Claims

1. A process for using a metal substrate for photoelectrochemical (PEC) water splitting (WS), the process comprising:
a) preparing a surface of the metal substrate;
b) coating the surface of the metal substrate using photoactive semiconductor thin films;
c) forming a working electrode;
d) scaling-up of the working electrode; and
e) reusing the metal substrate.

2. The process as claimed in claim 1, wherein step a) comprises obtaining adequate surface finish on the metal substrate followed by cleaning the surface of the metal substate.

3. The process as claimed in claim 2, wherein cleaning the surface of the metal substate comprises:
a) ultrasonic bath in acetone for a period of 15 minutes;
b) followed by ultrasonic cleaning in ethanol/isopropanol for another period of 15 minutes;
c) followed by ultrasonic cleaning in deionized water for another period of 15 minutes; and
d) drying with inert gas.

4. The process according to any one of claims 1 to 3, wherein the photoactive semiconductor thin films comprise transition metal oxides, chalcogenides, perovskites, spinels, etc.

5. The process according to any one of claims 1 to 4, wherein the metal substrate provides two active faces for deposition of the photoactive semiconductor thin films leading to bifacial coating.

6. The process according to any one of claims 1 to 5, wherein the working electrode comprises photoanode or photocathode.

7. The process according to any one of claims 1 to 6, wherein working electrodes of sizes up to 100 cm² can be synthesized.

8. The process according to any one of claims 1 to 7, wherein in step e) reusability of the metal substrate comprises:
a) primary cleaning for removal of photoactive semiconductor thin film coating without physically or chemically altering the metal substrate surface;
b) secondary cleaning involving removing metal substrate surface coating by physical, mechanical or chemical means; and
c) chemical treatment through chemical etching or any other material application.

9. The process as claimed in claim 8, wherein step b) comprises negligible loss of metal substrate material.

10. The process as claimed in claim 8 or 9, wherein chemical treatment comprises removal of used photoactive semiconductor material from the metal substrate surface.
